# EUROPEAN PATENT SPECIFICATION

(11) **EP 1 080 424 B1**
(45) Date of publication and mention of the grant of the patent: **12.07.2006**
(21) Application number: 98922827.5
(22) Date of filing: 27.05.1998
(51) Int. Cl.: G06F 17/28

(54) **A METHOD AND ARRANGEMENT FOR TRANSLATION OF INFORMATION**
VERFAHREN UND ANORDNUNG ZUR ÜBERSETZUNG VON INFORMATIONEN
PROCEDE ET DISPOSITIF SERVANT A TRADUIRE DES INFORMATIONS

(43) Date of publication of application: 07.03.2001
(73) Proprietor: Master's Innovations Ltd Oy, 00660 Helsinki (FI)
(72) Inventor: BECKS, Ari, 00660 Helsinki (FI); HEIKKILÄ, Simo, 15700 Lahti (FI)
(74) Representative: Kupiainen, Juhani Kalervo
(86) International application number: PCT/FI1998/000441
(87) International publication number: WO 1999/062002

(56) References cited:
- EP-A1- 0 262 938
- EP-A2- 0 805 403

## Description

The invention relates to a method and an arrangement for translating information given as a character string in a first language into a character string in a second language. The invention is advantageously implemented in machine translation of text information.

There are previously known methods for linguistically based machine translation of text information. In these methods, the syntax of each language is exactly programmed, so that each language will require a program algorithm of its own. For the storage of vocabularies in different languages, a centralised high-capacity translation memory is used. The EuroTra translation system of the European Union can be mentioned as an example of such a method. Such previously known methods have a number of drawbacks. Exact syntax programming requires most extensive programming operations. Such a syntax algorithm, as well as the necessary translation memory, require a large memory space in the database. Since a translation method operating in this manner is complex, translating within a reasonable time requires an extremely high-powered computer. Due to these shortcomings, the equipment suitable for translation is expensive. Known methods also involve the drawback that updating of the translation algorithm requires programming and updating of the computer program each time.

Document EP 805403 discloses a prior art translation method, which is based on translating segments according to the syntactic structure of a sentence. In this method structures are classified into defined types of structures based on their syntactic character; verb phrases, nominal phrases etc. forming predetermined units of sentence structure. The structures are thus divided into predetermined syntactic types that are permanently programmed into the system, and the translation is based on this fixed, programmed syntactic structure.

The object of the present invention is to provide a solution for the translation of information which enables the prior art inconveniences described above to be overcome.

One idea of the invention is to divide the information to be translated into structural segments and to do the translation by structural segments. The translation is performed on the basis of model segments and rules stored in the knowledge base. The data contained in the knowledge base are advantageously increased so that, in the process of translating, whenever necessary, the user is asked to provide translations of new structural segments over a user interface, these translations being subsequently stored as model segments in the knowledge base. Owing to the solution provided by the invention, the translating equipment requires a smaller memory capacity and a lower processor speed. Moreover, far less programming is required and the operation of the equipment can be developed without program updating.

The method of the invention for machine translation of information given as a character string in a first language into a character string in a second language is characterised by
- storing model segments in the form of character strings in the first language in the knowledge base and, logically connected to these, model segments in the form of character strings in the second language,
- identifying a structural segment in the character string of said first language following a first rule,
- comparing said identified structural segment with model segments in the form of character strings in the first language stored according to a second rule,
- striving to select one model segment on the basis of said comparison,
- reading a model segment in the form of a character string in the second language logically connected to the selected model, i.e. equivalent segment and
- translating said structural segment into said translation segment in the form of a character string in the second language on the basis of said equivalent segment and a third rule.
   The arrangement of the invention for translating information given as a character string in a first langauge into a character string in a second language is characterised in comprising
- knowledge base means for storing model segments in the form of said character strings in the first language and, in logical connection with these, for storing equivalent segments in the form of character strings in the second language, and for storing a first, second and third rule,
- means for identifying structural segments in said information given as a character string in the first language following a first rule,
- means for comparing said identified structural segment with the stored model segments in the form of character strings in the first language following a second rule,
- means for selecting one model segment on the basis of said comparison,
- means for reading a model segment, i.e. equivalent segment, in the form of a character string in the second language, logically connected to the selected model, in said knowledge base means and
- means for translating said structural segment into said translation segment in the form of a character string in the second language on the basis of said equivalent segment and the third rule, said translation segment representing the information to be given in said second language.

Preferred embodiments of the invention are described in the dependent claims.

The invention is described in greater detail below with the aid of the accompanying drawings, of which
figure 1 is a flow chart of a method in accordance with the invention for translating information,
figure 2 is a block diagram of an arrangement in accordance with the invention for translating information,
figure 3 illustrates text information divided into structural segments,
figure 4 illustrates the translating process of one structural segment with a close model segment appearing in the knowledge base and
figure 5 illustrates the translating process of a structural segment with no close model segment appearing in the knowledge base.

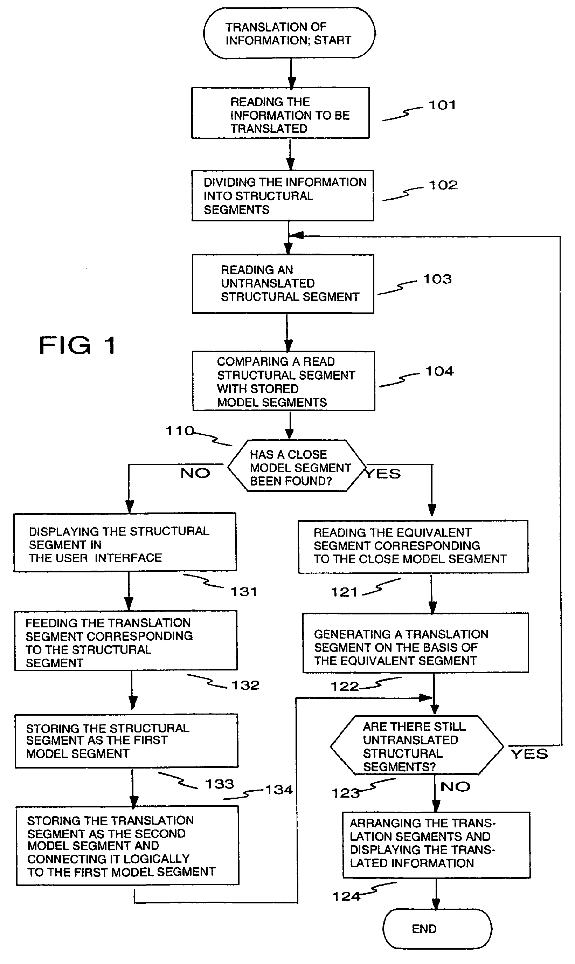

Figure 1 illustrates a method in accordance with the invention for translating information. First the information to be translated is read, block 101, and is divided into structural segments according to a first rule, block 102. Subsequently, the first structural segment is read in the untranslated information, block 103. The read structural segment is compared with the model segments stored in the knowledge base, blocks 104 and 110. The comparison is then performed according to a second rule, which determines whether the model segment is close to the structural segment to be translated. If a model segment closely related to this particular structural segment is found in the knowledge base, a model segment i.e. equivalent segment, in the second language logically connected to the close model, block 121, is read in the knowledge base. After this, a translation segment translated into the second language is formed from the structural segment to be translated on the basis of the read equivalent segment following a third rule, block 122. After this it is checked whether there are still untranslated structural segments, block 123. If there are still untranslated structural segments, the process returns to block 103, where the following untranslated structural segment is read for translation. If there are no untranslated structural segments left in block 123, the translation segments are arranged into sentences according to a fourth rule, and the translated information is then stored. The stored information can be further displayed, e.g. on a screen, or printed out e.g. on paper or a disc, block 124.

If no model segment close to the structural segment is found in the knowledge base in block 110, this particular structural segment is displayed over a user interface means, i.e. a display screen, block 131. The user then feeds the translation of the structural segment, i.e. the equivalent segment, block 132. The structural segment and the equivalent segment are stored for future use as model segments in the knowledge base, blocks 133, 134. After this the process proceeds to block 123 to continue as explained above. In this case, the equivalent segment is usually directly a translation segment, if the user has been asked to give the translation of the structural segment in the form of the original information. Thus the operation of block 122 is not indispensable in this case.

Said first rule, by which the structural segments are identified, can be based for instance on the identification of "intermediate words" or cases. Intermediate words are for instance prepositions and particles, which usually form standard character strings. Thus, they can be identified by simply comparing the character strings forming each word e.g. with the above known character strings forming an intermediate word. The identification of cases can be performed e.g. with the aid of suffixes by comparing the last characters of the words with known suffixes. As well known, the character strings forming a word can be separated by means of punctuation. Since a structural segment may advantageously comprise several words, it may also include one or more punctuation marks.

In its most straightforward version, said second rule, by which a structural segment is compared with the model segments, may imply similarity. In this case, exactly the same model segment as the present structural segment to be translated is searched in the knowledge base. However, considering the memory space required for the knowledge base, is is preferable not to store the different cases of e.g. the model segment separately in the knowledge base, but to identify also a model segment having a different case following the second rule. In this situation, the equivalent segment logically connected to the model segment should also be put in the case needed in order to generate a translation segment. This is done according to the third rule, which consequently covers information about the cases of the language in question.

In many cases, said fourth rule, by which the translation segments are arranged in translated sentences, implies placing the translation segments into the same order in which the structural segments to be translated were in the first language. Yet this order may depend on the language, and hence also said fourth rule is language-specific.

In the storage of the model segments, a type identifier of the model segment can also be advantageously stored. In this case, the type identifier is stored in logical connection with each model segment. If type identifiers are used, various rules can be applied the identification and translation of the structural segment on the basis of the model segment, depending on the type of the structural segment. Types of structural segments are e.g. the object of an action, a proper name, a verb, a place word, an adjective or an idiom. If type identifiers are used, the user is also asked to indicate the type to which the particular structural segment and its translation pertain as the structural segment is translated.

One idea of the invention is to update the knowledge base in the interactively operated translation process. It should be noted that the updating of the knowledge base is not necessarily confined to the storage of new model or equivalent segments, but the rules mentioned above can also be advantageously updated. The updating is then performed e.g. in connection with the translation of a new structural segment fed by the user by identifying the regularity of the input translation.

The translation of one piece of information from a first language into a second language has been described above. The previous updatings of the knowledge base are advantageously utilised in the translation of the subsequent pieces of information. Thus, the process of the invention for translating successive first and second pieces of information may comprise e.g. the following steps:
- reading first information given as a character string in the first language,
- performing the translation of the first information given as a character string in said first language on the basis of data in the knowledge base into first information given as a character string in the second language to the extent this is feasible in terms of the data available in the knowledge base,
- determining the additional data required to complete the translation of the first information given as a character string in the first language into first information given as a character string in the second language,
- feeding said additional data in the knowledge base with a view to update the knowledge base,
- finishing the translation of the first information given as a character string in the first language into first information given as a character string in the second language,
- storing said first information given as a character string in the second language,
- storing the second information given as a character string in the first language,
- performing the translation of the second information given as a character string in said first language on the basis of said updated data in the knowledge base into second information given as a character string in the second language.

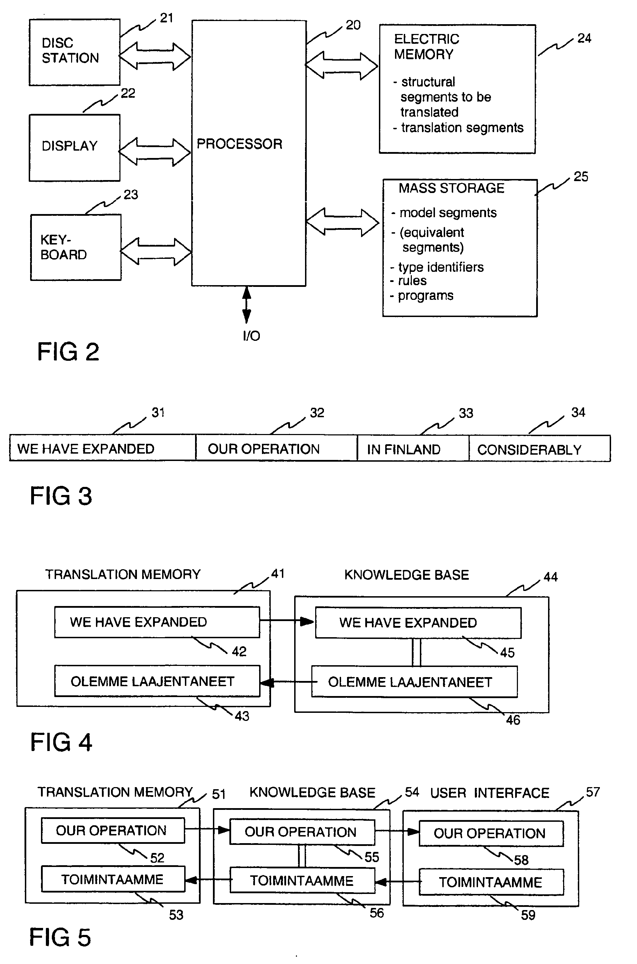

Figure 2 is a block diagram of a device arrangement of the invention for the translation of information. The arrangement comprises a disc station 21, a display screen 22 and a keyboard 23 as interface means connected to processor 20. By means of the disc station, information to be translated can be fed from the disc to the device and the translated information can be stored on the disc for use in other devices. The information in question can be transferred between the device and other data processing equipment also over a bus I/O. Display screen 22 can be used to display such structural segments to the user for which no translation is found in the knowledge base. The user can feed the translation of such a structural segment by using keyboard 23. The interface means mentioned above can also be used in the revision and correction of translated information.

The device shown in figure 2 also comprises an electric memory 24 for temporary storage of structural segments and translation segments, among other things. In addition, the device comprises a mass storage 25 for the storage of the knowledge base, i.e. model segments, type identifiers and rules, as well as programs. For instance a hard disc drive or an optical disc drive can be used as a mass storage. The components mentioned above can be provided by making previously known computer components operate in accordance with the invention using special software. Character strings and other data are advantageously transferred as electric signals between the components.

The implementation of the invention is by no means confined to the components described above, by contrast, the arrangement of the invention can have many different configurations, which this description enables a person skilled in the art to design.

Figure 3 illustrates an English sentence divided into structural segments 31, 32, 33 and 34. As shown in the figure, a structural segment typically comprises successive closely related words in a sentence. Thus a structural segment often includes a punctuation mark separating the words as well.

Figure 4 illustrates the translation of the first structural segment of the sentence appearing in figure 3 with the aid of one solution of the invention. In the figure, the structural segment 42 to be translated is stored in translation memory 41 and this structural segment is compared with the model segments stored in knowledge base 44. In the case illustrated in figure 4, this particular structural segment has been previously stored in the knowledge base as model segment 45, which is found in the comparison. If, for instance, the present information is to be translated into Finnish, the Finnish model segment 46 logically connected to the English model segment mentioned above is read in the knowledge base. In figure 4 the double line connecting model segments 45 and 46 illustrates a logical connection. When the Finnish model segment has been read it is stored as a translation segment in the translation memory.

Figure 5 illustrates the translation of the second structural segment shown in figure 3 with the aid of a solution of the invention. In this case, no English structural segment to be translated nor any Finnish equivalent segment has been previously stored as a model segment in the knowledge base. In this case, structural segment 52 to be translated, stored in translation memory 51, is compared with the model segments in the knowledge base, and if the desired equivalent segment is not found in the knowledge base, the structural segment 58 to be translated is shown on the display screen of interface 57. After this, the user feeds the translation 59 of structural segment 58 over the interface in knowledge base 54. In this manner, an English and a Finnish model segment are stored in logical connection in the knowledge base. Then the Finnish translation of the structural segment is stored as a translation segment 53 in translation memory 51.

Should the structural segments mentioned above reappear in the input information, corresponding model and equivalent segments will be found in the knowledge base, and there will be no need to ask the user to repeat them. If, however, the following input information contains the sentence "we have expanded our operation largely in Finland", "largely" would be a new structural segment. If no close model segment has been previously stored in the knowledge base, the user is asked to give the translation of it and "largely" is stored as a model segment in the knowledge base, and in logical connection with this, also the input translation fed by the user.

It should be noted that the operation of the equipment can be arranged so that the translation process is first performed by machine for the entire information to the extent allowed by the model segments stored in the knowledge base. After this the user can feed the necessary translations of new structural segments in the knowledge base. Such an arrangement has the advantage of the user not having to stay by the computer waiting for the translation process to be completed, but he/she may update the knowledge base with one single input at any suitable moment.

The model segments can be stored in the knowledge base as pairs of segments, specific pairs of model segments being stored for each language pair. Another way of proceeding is to logically connect model segments in several languages, so that the same model segments can be used as such in the translation of several language pairs. In this case, the model segments of each language can be fed as an input in the knowledge base each time they appear for the first time in the language in question. When input information is then fed in the knowledge base during the translation of one language pair, the information contained in the knowledge base will automatically increase also in the other language pairs.

The solution of the invention is not language-specific on principle, but can be applied to any language pair. Nor is the implementation of the invention restricted to "natural" languages used in ordinary communication, since it can be used to translate any language consisting of character strings into a second language consisting of character strings. Programming languages and data exchange protocols may be mentioned as examples of such other languages.

The solution of the invention has many advantages over prior art. Its operation requires but little language-specific knowledge for the division of the language into structural segments. A second advantage of the solution consists in additional information being collected in the memory during the process, so that the device "learns" new pairs of model segments and rules. Thus, with a straightforward configuration and a small amount of programming and updating it is possible to provide an efficient means for machine translation.

The solution of the invention is well adapted for use in situations where the arrangement of the invention is used to meet the needs of several users. In this case, the arrangement preferably comprises several interfaces, which may communicate with the knowledge base e.g. over a data transmission network. The knowledge base can then preferably be decentralised in such a way that the first, i.e. the main knowledge base can be used by a given user group, and the second, i.e. subknowledge base, may be used only by a few in such a given user group. This enables different users to update their own knowledge base e.g. with special vocabularies or expressions, without such knowledge suitable for special purposes being used by other users.

In such a decentralised knowledge base, the updating of the first, i.e. the main knowledge base can be performed from the second, i.e. subknowledge bases. Data stored in the second knowledge bases are then transferred to the first knowledge base by predetermined criteria. One such criterion may be the incidence of specific data. The data exchange between the knowledge bases can also take place with one common main knowledge database administrator checking and approving each data to be transferred.

A number of embodiments of the solution in accordance with the invention has been described above. The principle of the invention can, of course, be varied within the scope of protection of the claims, for instance regarding details of the embodiment and fields of application.

## Claims

1. A method for machine translation of information given as a character string in a first language into a character string in a second language, comprising
- storage in the knowledge base of model segments in the form of character strings in said first language, and in logical connection with these, model segments (133, 134) in the form of character strings in the second language,
- identifying a structural segment in the character string of said first language following a first rule (102),
- comparing said identified structural segment with model segments (104) in the form of character strings in the first language stored according to a second rule,
- striving to select one model segment (110) on the basis of said comparison,
- reading a model, i. e. equivalent segment (121) in the form of a character string in the second language logically connected to the selected model segment, and
- translating said structural segment into said translation segment in the form of a character string in the second language on the basis of said equivalent segment and a third rule (122),
- identification of an intermediate word and/or a suffix, wherein said first rule is essentially based on the identification of said intermediate word and/or suffix,
**characterised in that** in the method
- when no model segment to be selected following the second rule is found as a result of the comparison of the structural segments, the structural segment is displayed by means of a user interface (131) and the equivalent segment of the displayed structural segment is stored in the knowledge base by means of the user interface (132,133), and
- at least one of said rules is updated on the basis of data from the user interface.

2. A method as claimed in claim 1, **characterised in that** said information to be given as a character string in the second language is generated on the basis of translation segments and a fourth rule (124).

3. A method as claimed in any of the preceding claims, **characterised in that** said structural segment comprises a punctuation mark.

4. A method as claimed in any of the preceding claims, **characterised in that** the type identifier of the model segment is stored in logical connection with the model segment.

5. A method as claimed in any of the preceding claims, **characterised in that** there are more than two model segments representing different languages logically connected to each other.

6. A method as claimed in any of the preceding claims, **characterised in that** information is fed over the user interface to update the knowledge base with a view to translate first information and said input data is used to update other data than those needed for the translation of said first information in said knowledge base.

7. A method as claimed in any of the preceding claims, **characterised in that** it comprises steps for
- reading the first information given as a character string in the first language,
- translating the first information given as a character string in said first language on the basis of data in the knowledge base into first information given as a character string in the second language to the extent allowed by the data available in the knowledge base,
- determining the additional data needed to complete the translation of the first information given as a character string in the first language into first information in the form of a character string in the second language,
- feeding said additional data in the knowledge base to update the knowledge base,
- completing the translation of the first information given as a character string in the first language into first information given as a character string in the second language,
- storing said first information given in the second language,
- reading the second information given as a character string in the first langauge,
- translating the second information given as a character string in said first language into second information given as a character string in the second language on the basis of said updated data in the knowledge base.

8. An arrangement for translating information given as a character string in a first language into a character string in a second language, comprising
- knowledge base means (20,25) for storing model segments in the form of character strings in said first language, and in logical connection with these, equivalent segments in the form of character strings in the second language, and for storing a first, second and third rule,
- means (20,24) for identifying structural segments in the information given as a character string in said first language following a first rule,
- means (20,25) for comparing said identified structural segment with the model segments stored in the form of character strings in the first language following a second rule,
- means (20) for selecting one model segment on the basis of said comparison,
- means (20,25) for reading the model, i. e. equivalent segment in the form of a character string in the second language logically connected to the selected model segment in said knowledge base means and
- means (20,24) for translating said structural segment into said translation segment in the form of a character string in the second language on the basis of said equivalent segment and a third rule, said translation segment representing the information to be given in said second language,
wherein said means (20,24) for identifying the structural segment in said information given as a character string in the first language comprise means for identifying an intermediate word and/or suffix, said first rule being essentially based on said identification of the intermediate word and/or suffix,
**characterised in that**
- the arrangement comprises user interface means (22,23) for connecting the user to said knowledge base means,
- when no model segment to be selected following the second rule is found as a result of the comparison of the structural segments, the user interface means (22, 23) is arranged to display the structural segment and the equivalent segment of the displayed structural segment is arranged to be stored in the knowledge base by means of the user interface (22, 23), and
- at least one of said rules is arranged to be updated on the basis of data from the user interface means (22, 23).

9. An arrangement as claimed in claim 8, **characterised in that** it further comprises means (20,25) for generating information to be given as a character string in the second language on the basis of at least two translation segments and a fourth rule.

10. An arrangement as claimed in claim 8 or 9, **characterised in that** the user interface means are connected to said knowledge base means over a data transmission network.

11. An arrangement as claimed in any of claims 8-10, **characterised in that** said knowledge base means comprise a first knowledge base means (25) and a second knowledge base means so that specific users have access to said first knowledge base means and only some of said specific users have access to said second knowledge base means.

12. An arrangement as claimed in any of claims 8-11, **characterised in that** said knowledge base means comprise a first knowledge base means (25) and a second knowledge base means, the arrangement comprising means for data input from the user interface means to said second knowledge base means and means for selective transfer of data stored in said second knowledge base to said first knowledge base means.

## Patentansprüche

1. Verfahren zur maschinellen Übersetzung von Informationen, die als Zeichenkette in einer ersten Sprache vorliegen, in eine Zeichenkette in einer zweiten Sprache, umfassend:
Speichern von Modellsegmenten in einer Wissensbasis in Form von Zeichenketten in der ersten Sprache und, in logischer Verbindung mit diesen, von Modellsegmenten (133, 134) in Form von Zeichenketten in der zweiten Sprache,
Identifizieren eines Struktursegments in der Zeichenkette der ersten Sprache einer ersten Regel (102) folgend,
Vergleichen des identifizierten Struktursegments mit Modellsegmenten (104) in Form von Zeichenketten in der ersten Sprache, die gemäß einer zweiten Regel gespeichert sind,
Anstreben einer Auswahl eines Modellsegments (110) auf der Grundlage des Vergleichs,
Lesen eines Modells, d. h. eines äquivalenten Segments (121) in Form einer Zeichenkette in der zweiten Sprache, das mit dem ausgewählten Modellsegment logisch verbunden ist, und
Übersetzen des Struktursegments in ein Übersetzungssegment in Form einer Zeichenkette in der zweiten Sprache auf der Grundlage des äquivalenten Segments und einer dritten Regel (122),
Identifizieren eines Zwischenwortes und/oder einer Nachsilbe, wobei die erste Regel im Wesentlichen auf der Identifikation des Zwischenwortes und/oder der Nachsilbe beruht,
**dadurch gekennzeichnet, dass** in dem Verfahren
dann, wenn kein Modellsegment, das nach der zweiten Regel auszuwählen ist, als Ergebnis des Vergleichs der Struktursegmente gefunden wird, das Struktursegment mittels einer Benutzerschnittstelle (131) angezeigt wird, wobei das äquivalente Segment des angezeigten Struktursegments mittels der Benutzerschnittstelle (132, 133) in der Wissensbasis gespeichert wird, und
wenigstens eine der Regeln auf der Grundlage der Daten von der Benutzerschnittstelle aktualisiert wird.

2. Verfahren nach Anspruch 1, **dadurch gekennzeichnet, dass** die Informationen, die als Zeichenkette in der zweiten Sprache vorliegen sollen, auf der Grundlage von Übersetzungssegmenten und einer vierten Regel (124) erzeugt werden.

3. Verfahren nach irgendeinem der vorangehenden Ansprüche,
**dadurch gekennzeichnet, dass** das Struktursegment ein Satzzeichen umfasst.

4. Verfahren nach irgendeinem der vorangehenden Ansprüche,
**dadurch gekennzeichnet, dass** der Typbezeichner des Modellsegments in logischer Verbindung mit dem Modellsegment gespeichert wird.

5. Verfahren nach irgendeinem der vorangehenden Ansprüche,
**dadurch gekennzeichnet, dass** es mehr als zwei logisch miteinander verbundene Modellsegmente gibt, die verschiedene Sprachen repräsentieren.

6. Verfahren nach irgendeinem der vorangehenden Ansprüche,
**dadurch gekennzeichnet, dass** Informationen über die Benutzerschnittstelle zugeführt werden, um die Wissensbasis mit einer Auffassung zur Übersetzung der ersten Informationen zu aktualisieren, wobei die eingegebenen Daten verwendet werden, um andere Daten zu aktualisieren als diejenigen, die für die Übersetzung der ersten Informationen in der Wissensbank benötigt werden.

7. Verfahren nach irgendeinem der vorangehenden Ansprüche,
**dadurch gekennzeichnet, dass** es Schritte umfasst zum
Lesen der ersten Informationen, die als Zeichenkette in der ersten Sprache vorliegen,
Übersetzen der als Zeichenkette in der ersten Sprache vorliegenden ersten Informationen auf der Grundlage von Daten in der Wissensdatenbank in erste Informationen, die als Zeichenkette in der zweiten Sprache vorliegen, bis zu einem Ausmaß, das durch die in der Wissensbasis verfügbaren Daten ermöglicht wird,
Bestimmen der zusätzlichen Daten, die benötigt werden, um die Übersetzung der als Zeichenkette in der ersten Sprache vorliegenden ersten Informationen in erste Informationen in Form einer Zeichenkette in der zweiten Sprache abzuschließen,
Zuführen der zusätzlichen Daten in die Wissensbasis, um die Wissensbasis zu aktualisieren,
Abschließen der Übersetzung der als Zeichenkette in der ersten Sprache vorliegenden ersten Informationen in erste Informationen, die als Zeichenkette in der zweiten Sprache vorliegen,
Speichern der in der zweiten Sprache vorliegenden ersten Informationen,
Lesen der zweiten Informationen, die als Zeichenkette in der ersten Sprache vorliegen,
Übersetzen der zweiten Informationen, die als Zeichenkette in der ersten Sprache vorliegen, in zweite Informationen, die als Zeichenkette in der zweiten Sprache vorliegen, auf der Grundlage der aktualisierten Daten in der Wissensbasis.

8. Anordnung zum Übersetzen von Informationen, die als Zeichenkette in einer ersten Sprache vorliegen, in eine Zeichenkette in einer zweiten Sprache, umfassend:
Wissensbasismittel (20, 25) zum Speichern von Modellsegmenten in Form von Zeichenketten in der ersten Sprache und, in logischer Verbindung mit diesen, von äquivalenten Segmenten in Form von Zeichenketten in der zweiten Sprache, und zum Speichern einer ersten, einer zweiten und einer dritten Regel,
Mittel (20, 24) zum Identifizieren von Struktursegmenten in den Informationen, die als Zeichenkette in der ersten Sprache vorliegen, einer ersten Regel folgend,
Mittel (20, 25) zum Vergleichen der identifizierten Struktursegmente mit den Modellsegmenten, die in Form von Zeichenketten in der ersten Sprache gespeichert sind, einer zweiten Regel folgend,
Mittel (20) zum Auswählen eines Modellsegments auf der Grundlage des Vergleichs,
Mittel (20, 25) zum Lesen des Modells, d. h. des äquivalenten Segments in Form einer Zeichenkette in der zweiten Sprache, das mit dem ausgewählten Modellsegment im Wissensbasismittel logisch verbunden ist, und
Mittel (20, 24) zum Übersetzen des Strukturelements in ein Übersetzungssegment in Form einer Zeichenkette in der zweiten Sprache auf der Grundlage des äquivalenten Segments und einer dritten Regel, wobei das Übersetzungssegment die Informationen repräsentiert, die in der zweiten Sprache vorliegen sollen,
wobei das Mittel (20, 24) zum Identifizieren des Struktursegments in den als Zeichenkette in der ersten Sprache vorliegenden Informationen Mittel zum Identifizieren eines Zwischenwortes und/oder einer Nachsilbe umfasst,
wobei die erste Regel im Wesentlichen auf der Identifikation des Zwischenwortes und/oder der Nachsilbe beruht,
**dadurch gekennzeichnet, dass**
die Anordnung ein Benutzerschnittstellenmittel (22, 23) zum Verbinden des Benutzers mit dem Wissensbasismittel umfasst,
dann, wenn als Ergebnis des Vergleichs der Strukturelemente kein Modellsegment, das der zweiten Regel folgend auszuwählen ist, gefunden wird, das Benutzerschnittstellenmittel (22, 23) dafür ausgelegt ist, das Struktursegment anzuzeigen, wobei das äquivalente Segment des angezeigten Struktursegments dafür ausgelegt ist, mittels der Benutzerschnittstelle (22, 23) in der Wissensbasis gespeichert zu werden, und
wenigstens eine der Regeln dafür ausgelegt ist, auf der Grundlage der Daten vom Benutzerschnittstellenmittel (22, 23) aktualisiert zu werden.

9. Anordnung nach Anspruch 8, **dadurch gekennzeichnet, dass** sie ferner Mittel (20, 25) zum Erzeugen von Informationen, die als Zeichenkette in der zweiten Sprache vorliegen sollen, auf der Grundlage von wenigstens zwei Übersetzungssegmenten und einer vierten Regel umfasst.

10. Anordnung nach Anspruch 8 oder Anspruch 9, **dadurch gekennzeichnet, dass** das Benutzerschnittstellenmittel mit dem Wissensbasismittel über ein Datenübertragungsnetz verbunden ist.

11. Anordnung nach irgendeinem der Ansprüche 8 bis 10, **dadurch gekennzeichnet, dass** das Wissensbasismittel ein erstes Wissensbasismittel (25) und ein zweites Wissensbasismittel umfasst, so dass spezifische Benutzer Zugriff auf das erste Wissensbasismittel haben und nur einige der spezifischen Benutzer Zugriff auf das zweite Wissensbasismittel haben.

12. Anordnung nach irgendeinem der Ansprüche 8 bis 11, **dadurch gekennzeichnet, dass** das Wissensbasismittel ein erstes Wissensbasismittel (25) und ein zweites Wissensbasismittel umfasst, wobei die Anordnung Mittel für die Dateneingabe von dem Benutzerschnittstellenmittel in das zweite Wissensbasismittel und Mittel zum selektiven Übertragen von in der zweiten Wissensbasis gespeicherten Daten zum ersten Wissensbasismittel umfasst.

## Revendications

1. Procédé pour la traduction automatique d'une information donnée sous forme d'une chaîne de caractères dans une première langue en une chaîne de caractères dans une seconde langue, comprenant :
- le stockage dans la base de connaissance de segments modèles sous forme de chaînes de caractères dans ladite première langue, et en rapport logique avec eux, de segments modèles (133, 134) sous forme de chaînes de caractères dans la seconde langue,
- l'identification d'un segment structurel dans la chaîne de caractères de ladite première langue selon une première règle (102),
- la comparaison dudit segment structurel identifié avec des segments modèles (104) sous forme de chaînes de caractères dans la première langue stockée selon une deuxième règle,
- la sélection d'un segment modèle (110) sur la base de ladite comparaison,
- la lecture d'un modèle, c'est-à-dire d'un segment équivalent (121) sous forme d'une chaîne de caractères dans la seconde langue logiquement relié au segment modèle sélectionné, et
- la traduction dudit segment structurel en ledit segment de traduction sous forme d'une chaîne de caractères dans la seconde langue sur la base dudit segment équivalent et d'une troisième règle (122),
- l'identification d'un mot et/ou suffixe intermédiaire, dans laquelle ladite première règle est essentiellement basée sur l'identification dudit mot et/ou suffixe intermédiaire,
**caractérisé en ce que** dans le procédé
- lorsque aucun segment modèle devant être sélectionné selon la deuxième règle n'est trouvé suite à la comparaison des segments structurels, le segment structurel est affiché au moyen d'une interface utilisateur (131) et le segment équivalent au segment structurel affiché est stocké dans la base de connaissance au moyen de l'interface utilisateur (132, 133), et
- au moins une desdites règles est mise à jour sur la base de données provenant de l'interface utilisateur.

2. Procédé selon la revendication 1, **caractérisé en ce que** ladite information devant être donnée en tant que chaîne de caractères dans la seconde langue est produite sur la base de segments de traduction et d'une quatrième règle (124).

3. Procédé selon l'une quelconque des revendications précédentes, **caractérisé en ce que** ledit segment structurel comprend un signe de ponctuation.

4. Procédé selon l'une quelconque des revendications précédentes, **caractérisé en ce que** l'identificateur de type du segment modèle est stocké en rapport logique avec le segment modèle.

5. Procédé selon l'une quelconque des revendications précédentes, **caractérisé en ce qu'**il y a plus de deux segments modèles représentant différentes langues logiquement reliés les uns aux autres.

6. Procédé selon l'une quelconque des revendications précédentes, **caractérisé en ce qu'**une information est donnée par le biais de l'interface utilisateur afin de mettre à jour la base de connaissance dans le but de traduire la première information et lesdites données saisies servent à mettre à jour des données différentes de celles nécessaires à la traduction de ladite première information dans ladite base de connaissance.

7. Procédé selon l'une quelconque des revendications précédentes, **caractérisé en ce qu'**il comprend des étapes consistant à :
- lire la première information donnée sous forme d'une chaîne de caractères dans la première langue,
- traduire la première information donnée sous forme d'une chaîne de caractères dans ladite première langue à partir de données de la base de connaissance en une première information donnée sous forme d'une chaîne de caractères dans la seconde langue dans la mesure permise par les données disponibles dans la base de connaissance,
- déterminer les données supplémentaires nécessaires pour achever la traduction de la première information donnée sous forme d'une chaîne de caractères dans la première langue en une première information sous forme d'une chaîne de caractères dans la seconde langue,
- fournir lesdites données supplémentaires à la base de connaissance pour mettre à jour la base de connaissance,
- achever la traduction de la première information donnée sous forme d'une chaîne de caractères dans la première langue en une première information donnée sous forme d'une chaîne de caractères dans la seconde langue,
- stocker ladite première information donnée dans la seconde langue,
- lire la seconde information donnée sous forme de chaîne de caractères dans la première langue,
- traduire la seconde information donnée sous forme d'une chaîne de caractères dans ladite première langue en une seconde information donnée sous forme d'une chaîne de caractères dans la seconde langue à partir desdites données mises à jour dans la base de connaissance.

8. Dispositif pour traduire une information donnée sous forme d'une chaîne de caractères dans une première langue en une chaîne de caractères dans une seconde langue, comprenant :
- un moyen de base de connaissance (20, 25) pour stocker des segments modèles sous forme de chaînes de caractères dans ladite première langue, et en rapport logique avec eux, des segments équivalents sous forme de chaînes de caractères dans la seconde langue, et pour stocker une première, une deuxième et une troisième règle,
- un moyen (20, 24) pour identifier des segments structurels dans l'information donnée sous forme d'une chaîne de caractères dans ladite première langue selon une première règle,
- un moyen (20, 25) pour comparer ledit segment structurel identifié avec les segments modèles stockés sous forme de chaînes de caractères dans la première langue selon une deuxième règle,
- un moyen (20) pour sélectionner un segment modèle sur la base de ladite comparaison,
- un moyen (20, 25) pour lire le modèle, c'est-à-dire un segment équivalent sous forme d'une chaîne de caractères dans la seconde langue logiquement relié au segment modèle sélectionné dans ledit moyen de base de connaissance, et
- un moyen (20, 24) pour traduire ledit segment structurel en dit segment de traduction sous forme d'une chaîne de caractères dans la seconde langue sur la base dudit segment équivalent et d'une troisième règle, ledit segment de traduction représentant l'information devant être donnée dans ladite seconde langue,
dans lequel ledit moyen (20, 24) pour identifier le segment structurel dans ladite information donnée sous forme d'une chaîne de caractères dans la première langue comprend un moyen pour identifier un mot et/ou suffixe intermédiaire, ladite première règle étant essentiellement basée sur ladite identification du mot et/ou suffixe intermédiaire,
**caractérisé en ce que**,
- le dispositif comporte un moyen d'interface utilisateur (22, 23) pour connecter l'utilisateur audit moyen de base de connaissance,
- lorsque aucun segment modèle à sélectionner selon la deuxième règle n'est trouvé suite à la comparaison des segments structurels, le moyen d'interface utilisateur (22, 23) est prévu pour afficher le segment structurel et le segment équivalent au segment structurel affiché est prévu pour être stocké dans la base de connaissance au moyen de l'interface utilisateur (22, 23), et
- au moins une desdites règles est prévue pour être mise à jour sur la base de données provenant du moyen d'interface utilisateur (22, 23).

9. Dispositif selon la revendication 8, **caractérisé en ce qu'**il comprend en outre un moyen (20, 25) pour produire une information devant être donnée en tant que chaîne de caractères dans la seconde langue sur la base d'au moins deux segments de traduction et d'une quatrième règle.

10. Dispositif selon la revendication 8 ou 9, **caractérisé en ce que** le moyen d'interface utilisateur est connecté audit moyen de base de connaissance par l'intermédiaire d'un réseau de transmission de données.

11. Dispositif selon l'une quelconque des revendications 8 à 10, **caractérisé en ce que** ledit moyen de base de connaissance comprend un premier moyen de base de connaissance (25) et un second moyen de base de connaissance de sorte que des utilisateurs spécifiques ont accès audit premier moyen de base de connaissance et seuls quelques uns desdits utilisateurs spécifiques ont accès audit second moyen de base de connaissance.

12. Dispositif selon l'une quelconque des revendications 8 à 11, **caractérisé en ce que** ledit moyen de base de connaissance comprend un premier moyen de base de connaissance (25) et un second moyen de base de connaissance, le dispositif comprenant un moyen pour saisir des données depuis le moyen d'interface utilisateur dans ledit second moyen de base de connaissance et un moyen pour transférer de manière sélective des données stockées dans ladite seconde base de connaissance vers ledit premier moyen de base de connaissance.
